(19) Europäisches Patentamt
European Patent Office
Office européen des brevets

(11) Veröffentlichungsnummer: **0 304 720 B1**

(12) # EUROPÄISCHE PATENTSCHRIFT

(45) Veröffentlichungstag der Patentschrift: **26.06.91 Patentblatt 91/26**

(51) Int. Cl.$^5$: **C07F 7/08**

(21) Anmeldenummer: **88112931.6**

(22) Anmeldetag: **09.08.88**

(54) **Dimethylsilyl-substituierte Benzoylchloride und Verfahren zu ihrer Herstellung.**

(30) Priorität: **13.08.87 DE 3726999**

(43) Veröffentlichungstag der Anmeldung: **01.03.89 Patentblatt 89/09**

(45) Bekanntmachung des Hinweises auf die Patenterteilung: **26.06.91 Patentblatt 91/26**

(84) Benannte Vertragsstaaten: **CH DE FR GB LI**

(56) Entgegenhaltungen:
**US-A- 3 558 683**

(56) Entgegenhaltungen:
**COLLECTION CZECHOSLOV, CHEM. COMMUN., Band 35, 1970, Seiten 2324-2333; "Organosilicon compounds. LXXI. synthesis of some silylsubstituted benzoic acids" (F MARES et al.)**
**IDEM, Seite 2332, letzter Absatz**

(73) Patentinhaber: **Consortium für elektrochemische Industrie GmbH**
**Zielstattstrasse 20**
**W-8000 München 70 (DE)**

(72) Erfinder: **Winkler, Peter-Paul, Dr., Dipl.-Chem.**
**Am Waldrand 1**
**W-8000 München 70 (DE)**
Erfinder: **Kreuzer, Franz-Heinrich, Dr., Dipl.-Chem.**
**Josef-Gerstner-Strasse 14 D**
**W-8033 Martinsried (DE)**

**EP 0 304 720 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Dimethylsilyl-substituierte Benzoylchloride sowie Verfahren zu ihrer Herstellung, ausgehend von Dihalogenaromaten.

Difunktionelle Silane, die sowohl siliciumfunktionelle, als auch organofunktionelle Gruppierungen enthalten, sind bekannt und werden auf vielen Gebieten der Technik eingesetzt. So werden sie beispielsweise in Glasfaserverstärkten Polyester-und Epoxylaminaten seit langem als Haftvermittler verwendet (vgl. E.P. Plueddemann et al in "Mod. Plast." 1962 (8),
S. 135 ff.). Weitere Anwendungsgebiete, z.B. für die Herstellung von Spezialreifen, von Flüssigkristallanzeigen, von Textilfasern und von Metall(oxid)elektroden werden in der zusammenfassenden Darstellung von U. Deschler, P. Kleinschmit,
P. Panster in "Angew. Chemie" Bd. 98, S. 237-253 (1986) genannt.

H-Silane mit einer Carbonsäurechlorid-Funktion als organofunktioneller Gruppe sollten unter diesem Aspekt besonderes Interesse finden. Die H-Silan-Funktion kann beispielsweise an Alkene und Alkine addiert, zu Halogensilanen, Alkoxysilanen, Acyloxysilanen oder Aminosilanen umgewandelt oder zur Herstellung von Siloxanbindungen herangezogen werden, während die Carbonsäurechlorid-Funktion mit Hydroxy-, Mercapto- oder Aminogruppen enthaltenden Verbindungen, reagieren kann.

Erfindungsgemäß werden daher Dimethylsilyl-substituierte Benzoylchloride der allgemeinen Formel

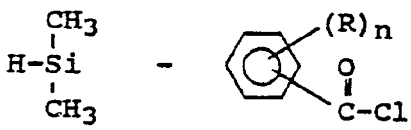

(1)

beansprucht, worin
R = Fluoratome, Alkylreste mit 1 bis 8 C-Atomen, die verzweigt oder geradkettig und gegebenenfalls mit Alkoxy-, Alkenyloxy-, Aryloxy- oder Dialkylaminogruppen substituiert sein können,
Alkenylreste mit 2 bis 8 C-Atomen, die geradkettig oder verzweigt sein können,
Alkoxy-, Alkenyloxy- oder Aryloxyreste mit bis zu 8 C-Atomen, Dialkylaminogruppen mit 1 bis 3 C-Atomen je Alkylrest und
n = 0 oder 1.

Beispiele für Reste R sind :
Fluor-, Methyl-, Ethyl-, n-Propyl-, i-Propyl-, n-Butyl-, Methoxymethyl-, Ethoxymethyl-, Allyloxymethyl-, Phenoxymethyl-, Dimethylaminomethyl-, Diethylaminomethyl-, 1-Propenyl-, 2-Propenyl-, Methoxy-, Ethoxy-, n-Propoxy-, n-Butoxy-, Allyloxy-, Phenoxy-, Dimethylamino-, Diethylamino- und Dipropylaminoreste.
Bevorzugte Reste R sind : Fluor-, Methyl-, Ethyl-, Methoxymethyl-, Allyloxymethyl-, Phenoxymethyl-, Dimethylaminomethyl-, Allyl-, Methoxy-, Allyloxy-, Phenoxy-, Dimethylamino- und Diethylaminoreste.

Die Reste COCl und R können dabei jeweils in bezug auf den Silylrest in 2-, 3- oder 4-Stellung am Benzolkern angeordnet sein.

Die bisher in der Literatur nicht beschriebenen Dimethylsilyl-substituierten Benzoylchloride (1) stellen wertvolle, vielseitig verwendbare Zwischenprodukte dar.

Die Herstellung der erfindungsgemäßen Dimethylsilyl-substituierten Benzoylchloride (1) kann in drei Stufen, ausgehend von den Dihalogenaromaten, vorgenommen werden nach folgendem Schema :

Gleichung I :

a)

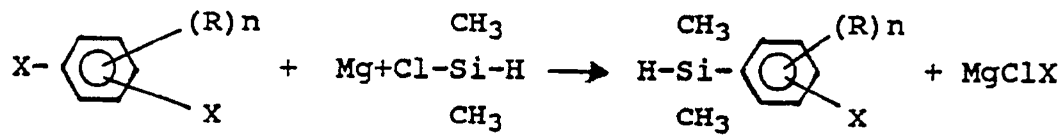

(2) (3)

b)

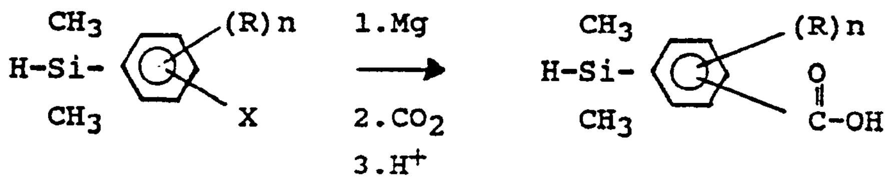


(3) (4)

c)

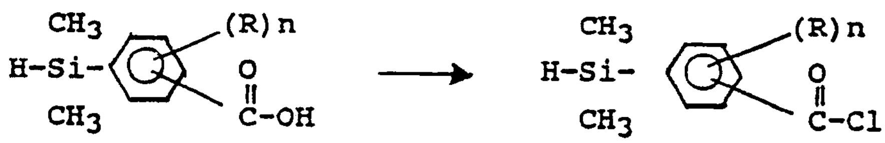

(4) (1)

In den angegebenen Formeln haben R und n die angegebene Bedeutung und X bedeutet Cl- oder Br-Atome.

Für die Herstellung von Halogenphenyl-dimethylsilanen, beispielsweise (4-Chlorphenyl)-dimethylsilan, waren bisher zwei zweistufige Synthesewege bekannt :

Gleichung II :

a)

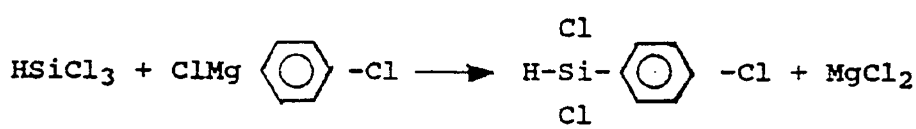

b)

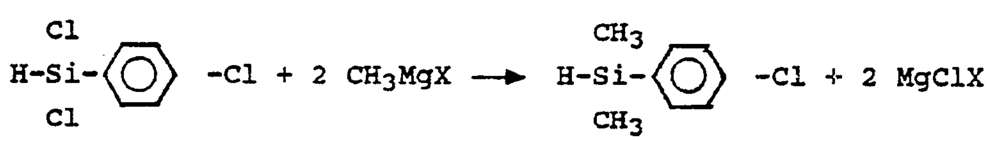

Gleiching III :

a) 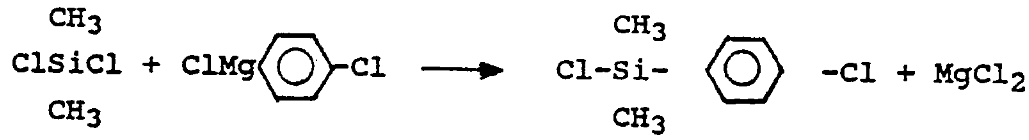

b) 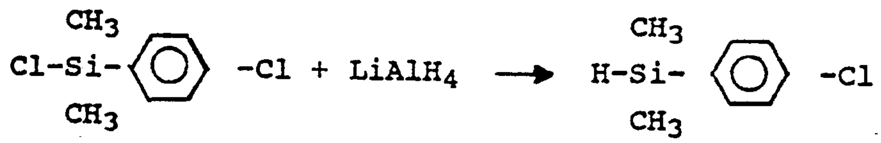

Für die Synthese nach Gleichung II wurden 3 Mol Magnesium benötigt, was unwirtschaftlich ist. Über die Ausbeute wurden keine Angaben gemacht (vgl. J.E. Baines, C. Eaborn, in "J. Chem. Soc.", S.1436 (1956)). Für den zweiten Syntheseweg wurde $LiAlH_4$ als Reduktionsmittel benötigt, was ebenfalls unwirtschaftlich ist und zudem Sicherheitsmaßnahmen für die Handhabung des Reduktionsmittels erfordert. Die Ausbeute nach dieser Synthese betrug 49% (vgl. G. Gerber, A. Balciunas, in "Makromol. Chem." Bd. 71, S. 62 (1964)).

Erfindungsgemäß erfolgt hingegen die Herstellung von beispielsweise (4-Chlorphenyl)-dimethylsilan gemäß Gleichung I a) aus Dimethylchlorsilan und 1,4-Dichlorbenzol in 70%iger Ausbeute.

Das als Ausgangsprodukt eingesetzte Silan fällt als Nebenprodukt bei der Rochow-Synthese an.

Erfindungsgemäß werden die substituierten Halogenphenyldimethylsilane der Formel (3) durch Herstellen der Mono-Grignardverbindung aus den Dihalogenarommaten (2) und deren Umsetzung mit Dimethylchlorsilan gemäß Gleichung I a) hergestellt.

Für die Durchführung dieser Verfahrensstufe werden die substituierten Halogenphenylmagnesiumhalogenide zweckmäßigerweise in einem offenkettigen oder cyclischen Ether als Lösungsmittel hergestellt. Bevorzugte Lösungsmittel sind Tetrahydrofuran und 1,2-Dimethoxyethan. Die Reaktionstemperatur sollte im Falle X = Cl vorzugsweise zwischen 50° und 70°C liegen. Im Falle X = Br kann die Reaktionstemperatur zwischen 20° und 60°C liegen. Höhere Temperaturen zur Herstellung der Halogenphenylmagnesiumhalogenide, wie sie unter den in der Literatur angegebenen Bedingungen erreicht werden (vgl. J.R. Leebrick, H.E. Ramsden, in "J. Org. Chem.", Bd. 23, S. 935 (1958)), sollten vermieden werden, da sonst größere Mengen an Di-Grignardverbindung gebildet werden. Zur Reaktionsbeschleunigung können zwischen 0,1 und 5 mol% Anthracen zugesetzt werden.

Für die Herstellung der Silanverbindungen (3) wird zweckmäßigerweise die Grignardlösung zu einer Lösung von Dimethylchlorsilan in einem inerten Lösungsmittel zugegeben. Beispiele für inerte Lösungsmittel sind neben den für die Grignardreaktion verwendeten Lösungsmitteln Benzol, Toluol oder Methyl-tert.-butylether.

Alternativ können die Silanverbindungen (3) auch dadurch hergestellt werden, daß Dimethylchlorsilan und die Dihalogenaromaten (2) gemeinsam, verdünnt in einem der oben genannten Lösungsmittel, zum Magnesium zugegeben und die Umsetzung zum Produkt (3) mit der in situ gebildeten Grignardverbindung erfolgt. Die Aufarbeitung der Reaktionsmischung kann durch Abtrennen des Magnesiumchlorids durch Filtration oder durch Zugabe von Wasser und Abtrennen der organischen Phase erfolgen.

Die Lösung des Rohproduktes wird eingeengt und destilliert.

Die Dimethylsilyl-substituierten Benzoesäuren (4) werden erfindungsgemäß nach Gleichung I b) durch Reaktion der substituierten Halogenphenyl-dimethylsilane (3) mit Magnesium unter Bildung der entsprechenden Grignardverbindungen hergestellt, welche mit Kohlendioxid zu den Carbonsäuresalzen umgesetzt werden. Die Benzoesäuren werden durch Ansäuern aus den Magnesiumsalzen freigesetzt.

Die Grignardreaktion wird in einem geeigneten Lösungsmittel durchgeführt. Beispiele hierfür sind offenkettige und cyclische Ether, wie Diethylether, Tetrahydrofuran, Dimethoxyethan und Diethylenglykoldimethylether. Besonders bevorzugt als Lösungsmittel ist Tetrahydrofuran.

Die Reaktionstemperatur kann zwischen 30° und 100°C liegen. Zur Erzielung einer befriedigenden Reaktionsgeschwindigkeit unter Bildung von möglichst wenig Nebenprodukten sollte die Reaktion im Fall X=Cl bevorzugt zwischen 50° und 80°C durchgeführt werden. Falls X = Br ist, kann die Reaktionstemperatur zwischen 20° und 80°C liegen.

Magnesium kann in Form von Pulver oder Spänen eingesetzt werden.

Als Reaktionsbeschleuniger können 0,1 bis 5 mol% Anthracen zugesetzt werden.

Die Umsetzung der substituierten Dimethylsilylphenylmagnesiumchloride mit Kohlendioxid kann durch Einbringen von Trockeneis oder durch Einblasen von gasförmigem $CO_2$ bzw. Kohlensäure-Schnee in die Reaktionslösung erfolgen. Vorzugsweise erfolgt die Umsetzung durch langsame Zugabe der Grignardlösung zu einer gesättigten Lösung von Kohlendioxid in Tetrahydrofuran. Die Reaktionstemperatur kann dabei zwischen –40° und +40°C liegen.

Die Freisetzung der Dimethylsilyl-substituierten Benzoesäuren (4) aus ihrem Magnesiumsalz erfolgt durch Ansäuern der Reaktionsmischung mit verd. Salzsäure oder verd. Schwefelsäure auf pH 3.

Die Aufarbeitung erfolgt durch Abtrennen und Einengen der organischen Phase. Das Produkt kristallisiert aus. Die Reinigung der Verbindung kann durch Destillation des Rohproduktes erfolgen. Alternativ kann das Produkt durch Zugabe eines unpolaren Lösungsmittels wie Petrolether quantitativ kristallisiert und eine zusätzliche Reinigung durch Umkristallisation in diesem Lösungsmittel vorgenommen werden.

Die erfindungsgemäße Synthese der Dimethylsilyl-substituierten Benzoylchloride (1) erfolgt nach Gleichung I c) durch Chlorierung der Dimethylsilyl-substituierten Benzoesäuren (4) mit Halogenierungsmitteln. Beispiele für Halogenierungsmittel sind Phosphorpentachlorid, Phosphortrichlorid, Phosgen, Oxalylchlorid oder Thionylchlorid. Bevorzugt als Halogenierungsmittel ist Thionylchlorid. Die Reaktion kann in einem Verdünnungsmittel durchgeführt werden. Beispiele für Verdünnungsmittel sind inerte Lösungsmittel wie Kohlenwasserstoffe, Halogenkohlenwasserstoffe und Ether. Bevorzugt sind unpolare Lösungsmittel wie aliphatische, verzweigte oder lineare Kohlenwasserstoffe oder Aromaten. Beispiele für besonders bevorzugte Lösungsmittel sind Benzol, Toluol, Xylol, Hexan und Heptan. Die Reaktionstemperatur kann im Bereich zwischen 0°C und dem Siedepunkt des Reaktionsgemisches liegen, bevorzugt ist eine Reaktionstemperatur zwischen 40°C und 80°C. Gegebenenfalls kann ein Reaktionsbeschleuniger zugesetzt werden. Beispiele hierfür sind Pyridin oder Dimethylformamid.

Falls Thionylchlorid als Halogenierungsmittel verwendet wird, kann, nach Beenden der Gasentwicklung, das Rohprudukt für weitere Synthesen verwendet werden, oder nach Abdampfen des Lösungsmittels und Destillation die Reinsubstanz gewonnen werden.

Die Synthese der Dimethylsilyl-substituierten Benzoylchloride der Formel (1) in guter Ausbeute durch Umsetzung der Dimethylsilyl-substituierten Benzoesäuren (4) mit Thionylchlorid unter Erhalt der H-Silan-Funktion muß als überraschend bewertet werden, da hierbei mehrere Nebenreaktionen zu erwarten gewesen sind. So ist beispielsweise bekannt, daß der in der Reaktion entstehende Halogenwasserstoff die Si-H Bindung bzw. die Si-C Bindung spalten kann (vgl. W. Noll, Chemie und Technologie der Silicone, S. 80, Verlag Chemie 1968, 2. Auflage). Ferner ist bekannt, daß Säurechloride von H-Silanen zu Aldehyden reduziert werden (vgl. J.W. Jenkins, H.W. Post in "J. Organ. Chem.", Bd. 15, S. 556 (1950)). Außerdem kann aufgrund der generell reduzierenden Eigenschaften der H-Silane (vgl. S. Pawlenko in : "Methoden der organischen Chemie" (Houben-Weyl) Bd. 13/5, S. 350 ff, Georg Thieme Verlag Stuttgart 1980, 4. Auflage) eine Redoxreaktion beispielsweise mit Thionylchlorid zum Chlorsilan eintreten. Die Reduktion von Carbonylverbindungen durch H-Silane im sauren Milieu ist bekannt (vgl. a.a.o.).

Als einziger Vertreter der der Vorprodukte (4) ist (4-Dimethylsilyl)-benzoesäure bekannt. Die Synthese erfolgte aus (4-Bromphenyl)-dimethylsilan in 23%iger Ausbeute (vgl. F. Mares, P. Neudörfel, Z. Plzak, V. Chvalovski, in "Collect, Czech., Chem. Commun.", Bd. 35, S. 2324 (1970)).

Erfindungsgemäß wird hingegen (4-Dimethylsilyl)-benzoesäure nach Gleichung I b) aus dem preisgünstigeren (4-Chlorphenyl)-dimethylsilan in 68%iger Ausbeute hergestellt.

Beispiel

a) Herstellung von (4-Chlorphenyl)-dimethylsilan nach Gleichung I a) :

9 kg 1,4-Dichlorbenzol (60 mol) wurden in 10,2 l Tetrahydrofuran gelöst.

In einen 50 l Rührkessel wurden 1440 g mit Jod angeätzte Magnesiumspäne gegeben. Dann wurden 1,4 l Tetrahydrofuran und 600 ml der 1,4-Dichlorbenzol-Lösung zugesetzt und die Mischung auf 50°C erwärmt. Durch Zugabe einiger ml Ethylbromid wurde die Reaktion gestartet. Die Zugabe der Dichlorbenzol-Lösung erfolgte innerhalb von 4 Stunden, wobei die Reaktions-temperatur zwischen 60 und 63°C gehalten wurde. Nachdem alles Dichlorbenzol zugegeben worden ist, wurde das Reaktionsgemisch 2,5 Stunden bei 60°C zum Nachreagieren stehen gelassen. Dann wurde das Reaktionsgemisch abgekühlt, mit 6 l Tetrahydrofuran verdünnt und in den Tropftrichter übergeführt. Durch Auswiegen des nicht umgesetzten Magnesiums wurde der Umsatz bestimmt. Er betrug 88 Gew.-%. Dementsprechend wurden im 50 l Rührkessel 52,9 mol Dimethylchlorsilan in 12 l Methyl-tert.-butylether vorgelegt. Durch den Tropftrichter wurde die Grignard-Lösung mit solcher Geschwindigkeit zugegeben, daß die Temperatur unter Kühlung bei 30°C gehalten werden konnte. Dann wurde das Reaktionsgemisch noch 30 min. bei Raumtemperatur nachgerührt. Zum Kristallbrei wurde soviel Wasser zugesetzt, daß sich zwei homogene Phasen bildeten. Die organische Phase wurde abgetrennt, die wässrige

Phase einmal mit Methyl-tert.-butyl-ether extrahiert. Das Rohprodukt wurde im Wasserstrahlvakuum destilliert. Es wurden 6305 g (4-Chlor-phenyl)-dimethylsilan erhalten, das sind 70,0 Gew.-% Ausbeute bezogen auf die umgesetzte Menge Dichlorbenzol.
Sdp.: 77-80°C/15 hPa.

b) Herstellung von (4-Dimethylsilyl)-benzoesäure nach Gleichung I b):

72 g Magnesiumspäne wurden in einem Rundkolben vorgelegt und mit Jod angeätzt. Eine Lösung bestehend aus 508,5 g (4-Chlorphenyl)-dimethylsilan in 650 ml Tetrahydrofuran wurde im Tropftrichter bereitgestellt. 100 ml der Silanlösung wurden zugetropft, die Temperatur auf 60°C eingestellt und mit Ethylbromid gestartet. Die restliche Silan-Lösung wurde im Verlauf von 3,5 Stunden zugetropft. Die Temperatur wurde dabei auf 60°C gehalten. Nach beenden der Zugabe, wurde das Reaktionsgemisch für zwei Stunden bei 60°C zum Nachreagieren stehengelassen. Es wurde eine grauweiße Suspension erhalten. Der Umsatz betrug 78%. Es wurde vom nicht umgesetzten Magnesium abgetrennt und die Suspension in einen Tropftrichter übergeführt. Dann wurden 1 l Tetrahydrofuran mit gasförmigem Kohlendioxid gesättigt und bei 15-25°C unter ständigem $CO_2$-Strom langsam in die Grignardverbindung eingetragen.

Nach einer Stunde war die gesamte Menge an Grignardverbindung zugesetzt, es wurde noch 20 min. unter weiterem Einleiten von $CO_2$ nachgerührt. Dann wurde das Reaktionsgemisch langsam in ca. 250 ml Wasser eingetragen. Der pH-Wert des 2-Phasen-Systems wurde dabei durch Zugeben von verdünnter HCl auf pH 5 gehalten. Zum Schluß wurde auf pH 3 eingestellt. Die organische Phase wurde abgetrennt, die wäßrige Phase mit Methyl-tert.-butylether extrahiert. Die organischen Phasen wurden vereinigt und eingeengt. Über Nacht kristallisierte die viskose Lösung. Zur besseren Kristallisation wurde etwas Petrolether zugesetzt, anschließend abfiltriert. Die Kristalle wurden mit Petrolether gewaschen und getrocknet. Die Mutterlauge wurde nachkristallisiert. Insgesamt wurden 275 g (4-Dimethyl-silyl)-benzoesäure erhalten, das sind 67,8 Gew.-% Ausbeute, bezogen auf die umgesetzte Menge (4-Chlorphenyl)-dimethylsilan.
Sdp.: 109 - 112°C/0,13 hPa.

c) Herstellung von (4-Dimethylsilyl)-benzoylchlorid nach Gleichung I c):

173 g (4-Dimethylsilyl)-benzoesäure (0,96 mol) wurden in 150 ml Toluol gelöst und 117 g Thionylchlorid (0,96 mol) zugesetzt. Die Mischung wurde für acht Stunden auf 50°C erwärmt, wobei $SO_2$ und HCl entwichen. Das Lösungsmittel wurde abgezogen und der Rückstand destilliert. Es wurden 171,4 g (4-Dimethylsilyl)-benzoylchlorid erhalten, das sind 90,3 Gew.-% Ausbeute.
Sdp.: 64°C/0,03 hPa.

$^1$H-NMR ($CDCl_3$): 8,00 ppm (d, 8Hz, 2H), 7,50 ppm (d, 8Hz, 2H), 4,44 ppm (Septett, 3,5Hz, 1H), 0,37 ppm (d, 3,5Hz, 6H)

## Ansprüche

1. Dimethylsilyl-substituierte Benzoylchloride der allgemeinen Formel

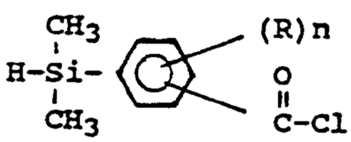

(1)

worin R = Fluoratome, Alkylreste mit 1 bis 8 C-Atomen, die verzweigt oder geradkettig und gegebenenfalls mit Alkoxy-, Alkenyloxy-, Aryloxy- oder Dialkylaminogruppen substituiert sein können,
Alkenylreste mit 2 bis 8 C-Atomen, die geradkettig oder verzweigt sein können, Alkoxy-, Alkenyloxy- oder Aryloxyreste mit bis zu 8 C-Atomen, Dialkylaminogruppen mit 1 bis 3 C-Atomen je Alkylrest und
n = 0 oder 1,
wobei die Reste COCl und R jeweils in bezug auf den Silylrest in 2-, 3- oder 4-Stellung am Benzolkern angeordnet sein können.

2. (4-Dimethylsilyl)-benzoylchlorid.

3. Verfahren zur Herstellung der Dimethylsilyl-substituierten Benzoylchloride (1) gemäß Anspruch 1,

dadurch gekennzeichnet, daß

a) Dihalogenaromaten der allgemeinen Formel

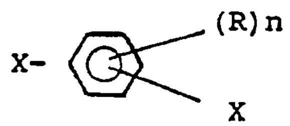

(2)

worin R und n die angegebene Bedeutung haben und X = Chlor- oder Bromatome, mit Dimethylchlorsilan und Magnesium nach Grignard umgesetzt unter Bildung von Halogenphenyl-dimethylsilanen der allgemeinen Formel

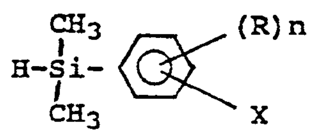

(3)

b) die Halogenphenyl-dimethylsilane (3) mit Magnesium nach Grignard in Gegenwart von Kohlendioxid umgesetzt unter Bildung von Dimethylsilyl-substituierten Benzoesäuren der allgemeinen Formel

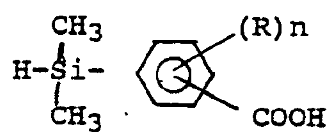

(4)

und anschließend

c) die Dimethylsilyl-substituierten Benzoesäuren (4) mit Halogenierungsmitteln in die Dimethylsilyl-substituierten Benzoylchloride (1) übergeführt werden.

4. Verfahren nach Anspruch 3, dadurch gekennzeichnet, daß als Halogenierungsmittel in Stufe c) Thionylchlorid verwendet wird.

## Claims

1. Dimethylsilyl-substituted benzoyl chloride of the formula

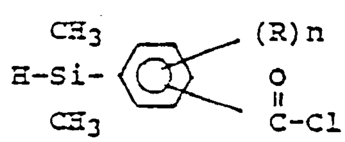

(1)

in which R – fluorine atoms, alkyl radicals having 1 to 8 carbon atoms, which may be branched or straight-chain and optionally substituted by alkoxy, alkenyloxy, aryloxy or dialkylamino groups, alkenyl radicals having 2 to 8 carbon atoms, which may be straight-chain or branched, alkoxy, alkenyloxy or aryloxy radicals having up to 8 carbon atoms, or dialkylamino groups having 1 to 3 carbon atoms per alkyl radical, and
n = 0 or 1,
where the radical COCl and R may in each case be arranged in the 2-, 3- or 4-position on the benzene ring, with respect to the silyl radical.

2. (4-Dimethylsilyl)benzoyl chloride.

3. Process for the preparation of a dimethylsilylsubstituted benzoyl chloride (1) according to Claim 1, characterized in that

a) a dihaloaromatic of the formula

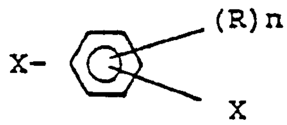

(2)

in which R and n have the meaning given and X = chlorine or bromine atoms, is reacted with dimethylchlorosilane and magnesium by the method of Grignard, forming a halophenyldimethylsilane of the formula

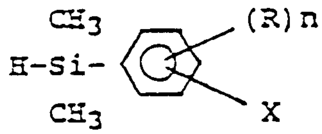

(3)

b) the halophenyldimethylsilane (3) is reacted with magnesium by the method of Grignard in the presence of carbon dioxide, forming a dimethylsilyl-substituted benzoic acid of the formula

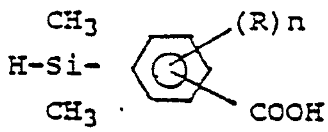

(4)

and subsequently

c) the dimethylsilyl-substituted benzoic acids (4) are converted into the dimethylsilyl-substituted benzoyl chloride (1) using a halogenating agent.

4. Process according to Claim 3, characterized in that the halogenating agent used in step c) is thionyl chloride.

**Revendications**

1. Chlorures de benzoyles qui portent un radical diméthylsilyle et qui répondent à la Formule générale :

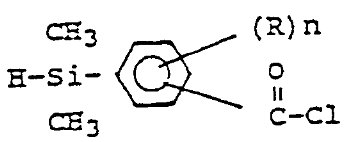

(1)

dans laquelle

R représente un atome de fluor, un radical alkyle contenant de 1 à 8 atomes de carbone, qui peut être linéaire ou ramifié et qui peut éventuellement porter des radicaux alcoxy, alcényloxy, aryloxy ou dialkylamino comme substituants, un radical alcényle contenant de 2 à 8 atomes de carbone, qui peut être linéaire ou ramifié, un radical alcoxy, alcényloxy ou aryloxy contenant au plus 8 atomes de carbone, ou un radical dialkylamino dont chacun des alkyles contient de 1 à 3 atomes de carbone, et

n est égal à 0 ou à 1,

les radicaux COCl et R occupant chacun sur le noyau benzénique l'une des positions 2, 3 et 4 par rapport au radical silyle.

2. Chlorure de (diméthylsilyl)-4 benzoyle.

3. Procédé pour préparer les chlorures de benzoyles diméthylsilylés (1) selon la revendication 1, procédé caractérisé en ce que :

a) on fait réagir des composés aromatiques dihalogénés répondant à la Formule générale :

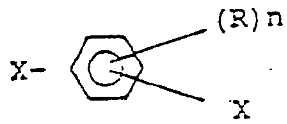

(2)

dans laquelle R et n ont les significations qui leur ont été données ci-dessus, et X représente un atome de chlore ou de brome,
avec du diméthyl-chlorosilane et du magnésium selon Grignard, réaction qui donne naissance à des (halogénophényl)-diméthylsilanes de Formule générale 3 :

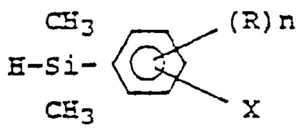

(3),

b) on fait réagir les (halogénophényl)-diméthylsilane (3) avec du magnésium selon Grignard, en présence de dioxyde de carbone, réaction qui donne naissance à des acides benzoïques diméthylsilylés qui répondent à la Formule générale 4 :

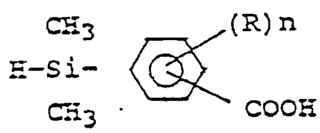

(4),

et ensuite

c) on transforme les acides benzoïques diméthylsilylés (4), au moyen d'agents d'halogénation, en les chlorures de benzoyles diméthylsilylés (1).

4. Procédé selon la revendication 3 caractérisé en ce qu'on utilise comme agent d'halogénation, dans l'étape c), le chlorure de thionyle.